# EUROPEAN PATENT APPLICATION

(11) **EP 1 580 455 A2**
(43) Date of publication of application: **28.09.2005**
(21) Application number: 05003464.4
(22) Date of filing: 17.02.2005
(51) Int. Cl.: F16H 3/00

(54) **Twin-clutch manual transmission**

(30) Priority: 22.03.2004 JP 2004082295
(71) Applicant: NISSAN MOTOR CO., LTD., Kanagawa-ken (JP)
(72) Inventor: Soeda, Kazuhiko, Tokyo 124-0014 (JP)
(74) Representative: Weber, Joachim

(57) **Abstract**

A twin-clutch manual transmission comprising: first and second input shafts (5,6) adapted to selectively receive an engine power output through respective clutches (C1,C2); a first gear range group including gear sets which are disposed between a rear end portion of the first input shaft (3), protruding from a rear end of the second input shaft (6) in an area remote from an engine, and a counter shaft (15) parallel to the first and second input shafts (5,6); a second gear range group including gear sets (62,64,66) disposed between the second input shaft (6) and the counter shaft (15); an output shaft (11) placed in a concentric and abutting relationship with a rear end of the first input shaft (5); and a reduction gear set (19,80) disposed between the output shaft (11) and the counter shaft (15) to drivably connect the counter shaft (15) to the output shaft (11).

## Description

### BACKGROUND OF THE INVENTION

### FIELD OF THE INVENTION

The present invention relates to a twin-clutch manual transmission which includes two clutches respectively connected by shafts to two groups of transmission gear sets, in which smooth gearshifts are achieved by alternately disengaging one of the clutches while engaging the other to change the gear set engaged.

### DESCRIPTION OF RELATED ART

Japanese Patent Application Laid-open Publication no.8-320054 discloses a twin-clutch manual transmission for a front engine and front wheel drive vehicle (FF-vehicle), which includes first and second input shafts adapted to be selectively and drivably connected for receiving an engine power output through respective clutches. The second input shaft is hollow and rotatably supported on the first input shaft. The first input shaft protrudes outward from a rear end of the second input shaft at a position remote from the engine. Gear sets of even-numbered gear range group is disposed between a rear end protruding portion of the first input shaft and the counter shaft which is placed in parallel to the first and second input shafts, for suitably providing selective power transfer. Further, gear sets of odd-numbered gear range group are disposed between the second input shaft and the counter shaft for suitably providing selective power transfer, whereby the engine power output resulting from gearshift depending on a selected gear range can be extracted from a front end of the counter shaft in a radial direction at a position closer to the engine.

With such a twin-clutch manual transmission, even when one gear range of one of the groups is selected with the associated clutch being engaged, next gear range of the other group can be pre-selected with the associated clutch therewith being disengaged. A gearshift can be realized by disengaging the clutch associated with the one gear range, while engaging the clutch associated with the next gear range of the other group, that is, upon a so-called clutch changeover control. By alternately selecting an intended gear range between the gear range groups, it is possible to perform an automatic power transmission even with a manual transmission.

### SUMMARY OF THE INVENTION

Since the twin-clutch manual transmission specific for the FF-vehicle is arranged to extract the engine power output, resulting from gearshift, from the front end of the counter shaft at the position closer to the engine in the radial direction, the counter shaft per se plays a role as an output shaft and no need arises for providing a reduction gear set to perform power transfer between the counter shaft and the output shaft.

In a front engine and rear wheel drive vehicle (FR-vehicle), the structure and configuration for a single-clutch manual transmission is used to mount a twin-clutch manual transmission. A reduction gear set is disposed between the input shaft and the counter shaft to cause the engine power output to be transferred to the counter shaft, whereupon the rotational speed of the counter shaft is changed depending on the selected gear range, then allowing the engine power output to be extracted from the output shaft that is in a concentric and abutting relationship with the input shaft.

However, with such technology of performing gearshift for the engine power output after the torque is increased by such a reduction gear set, there is a need for whole gear sets to have increased face widths so as to withstand the increased torque, resulting in an increase in an axial dimension of the power transmission and an increase in costs.

The present invention has been accomplished based upon a fact that the engine power output, resulting from gearshift depending on the selected gear range, of the twin-clutch manual transmission needs to be extracted from a rearward end of the first input shaft at a position remote from the engine, and the output shaft is therefore concentrically placed in abutting relationship with the rear end of the first input shaft with the above-described reduction gear set intervened between the output shaft and the counter shaft.

It is an object of the present invention to provide a twin-clutch manual transmission which allows gear sets for gearshift to be located in a torque transmission flow path upstream of a reduction gear set, and to prevent an increased torque, resulting from speed reduction using the reduction gear set, from passing through the gear sets for gearshift, thereby contributing to reducing an axial dimension of a power transmission and saving costs.

An aspect of the present invention is a twin-clutch manual transmission comprising: first and second input shafts adapted to selectively receive an engine power output through respective clutches, the second input shaft being hollow and rotatably supported on the first input shaft; a first gear range group including gear sets which are disposed between a rear end portion of the first input shaft, protruding from a rear end of the second input shaft in an area remote from an engine, and a counter shaft parallel to the first and second input shafts, to provide power transfer at their gear ratios, respectively; a second gear range group including gear sets disposed between the second input shaft and the counter shaft to provide power transfer at their gear ratios, respectively; an output shaft placed in a concentric and abutting relationship with a rear end of the first input shaft for extracting a power output resulting from speed reduction depending on a selected gear range; and a reduction gear set disposed between the output shaft and the counter shaft to drivably connect the counter shaft to the output shaft.

### BRIEF DESCRIPTION OF THE DRAWINGS

The invention will now be described with reference to the accompanying drawings wherein:
FIG. 1 is a diagram of a twin-clutch manual transmission according to an embodiment of the present invention.
FIG. 2 is a cross-sectional view of the twin-clutch manual transmission according to the embodiment of the present invention.

### DETAILED DESCRIPTION OF THE PREFERRED EMBODIMENT

An embodiment of the present invention will be explained below with reference to the drawings.

The twin-clutch manual transmission of the embodiment is applied to a front engine and rear wheel drive vehicle (FR vehicle).

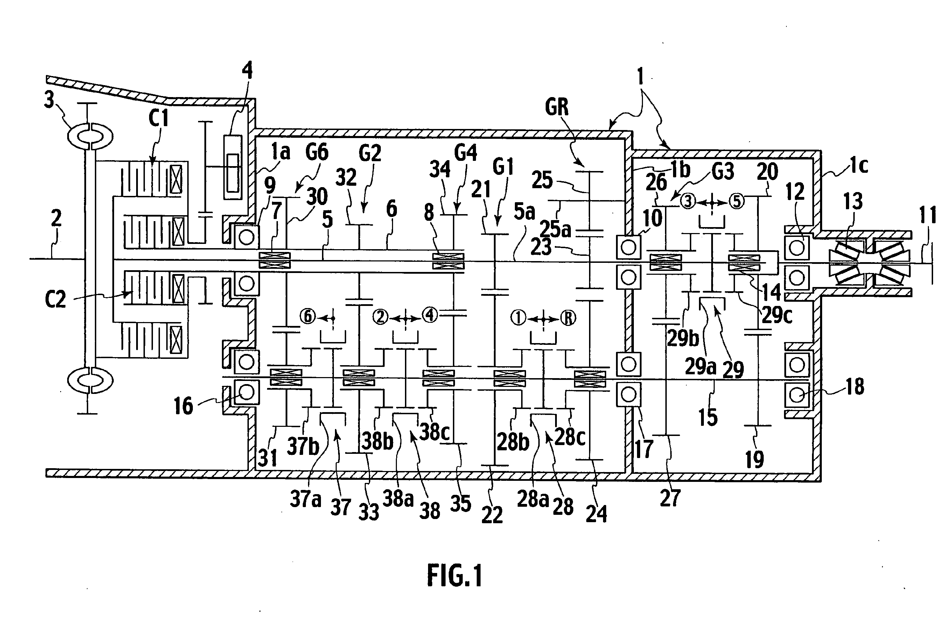

As shown in FIG. 1, the twin-clutch manual transmission is comprised of a transmission case 1 and a gearshift mechanism accommodated in the transmission casing 1, which is described below in detail.

The gearshift mechanism includes an automatic clutch C1 disposed to be closer to an engine with crankshaft 2, which cooperates with odd-numbered gear range group for "First-speed range", "Third-speed range", "Fifth-speed range" and "Reverse drive", and an automatic clutch C2 disposed to be closer to the engine, which cooperates with even-numbered gear range group for "Second-speed range", "Fourth-speed range" and "Sixth-speed range". Both the clutches C1, C2 are connected to the engine crankshaft 2 under a buffered condition by means of a torsional dumper 3.

Also disposed inside a front portion of the transmission case 1 is an oil pump 4 which is driven by the engine through the torsional dumper 3 at all times. The oil pump 4 provides hydraulic oil as medium to control selection of gear range involving engagement of the clutches C1, C2.

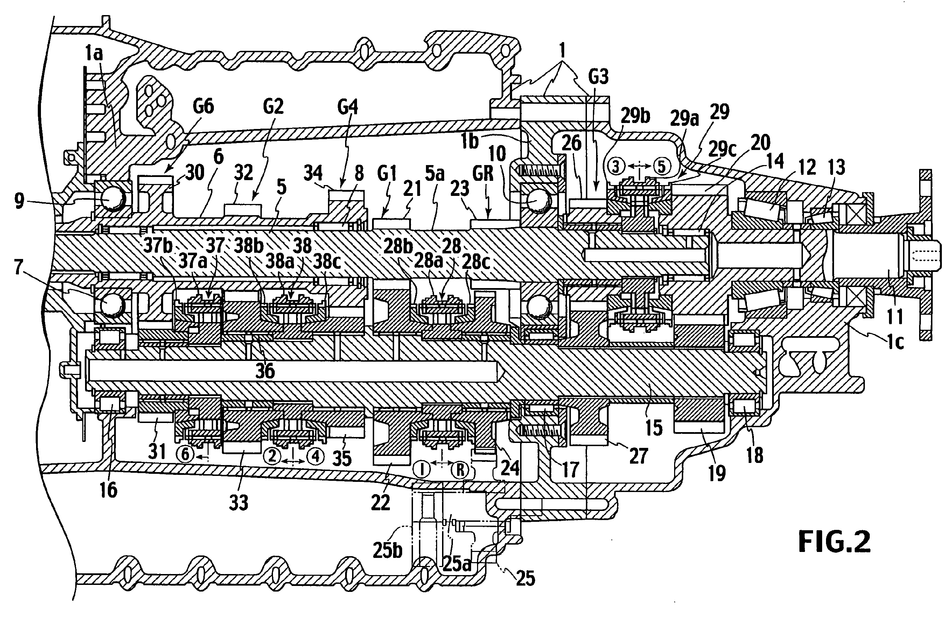

The gearshift mechanism in the transmission case 1 is comprised of, as shown in FIGS. 1 and 2, a first input shaft 5 and a second input shaft 6 to which an engine power output is selectively delivered through the torsional dumper 3 by means of the odd-numbered gear range clutch C1 and the even-numbered gear range clutch C2. The second input shaft 6 is a hollow shaft through which the first input shaft 5 axially extends. Defined between the first and second input shafts 5, 6 is an annular or tubular space in which front and rear needle bearings 7, 8 are incorporated in an axially spaced relationship. These bearings 7 and 8 rotatably support the first input shaft 5 inside the second input shafts 6 in a concentric relation.

The first and second input shafts 5, 6 have respective forward ends located closer to the engine, both of which extend forward from a front wall 1a of the transmission case 1 and are connected to the associated clutches C1, C2, respectively.

The second input shaft 6 has a front end whose outer periphery is rotatably supported by the front wall 1a of the transmission case 1 by means of a ball bearing 9. The front needle bearing 7 is mounted in the annular space in the vicinity of the ball bearing 9, while the rear needle bearing 8 is mounted in a rear end of the second input shaft 6 at a position remote from the engine.

The first input shaft 5 has a rear end portion 5a protruding rearward from the rear end of the second input shaft 6, which penetrates through an intermediate wall 1b of the transmission case 1 at which a ball bearing 10 is mounted for rotatably supporting the rear end portion 5a on the intermediate wall 1b of the transmission case 1.

Concentrically disposed in abutting relationship with the rear end portion 5a of the first input shaft 5 is an output shaft 11 that is rotatably supported on a rearwall 1c of the transmission case 1 by means of a ball bearing 12 and a tapered roller bearing 13. The output shaft 11 is rotatably carried by the rear end portion 5a of the input shaft 5 by means of a needle bearing 14.

Disposed in parallel to the first and second input shafts 5 , 6 and the output shaft 11 is a counter shaft 15 that is rotatably supported on the front wall 1a, the intermediate wall 1b and the rear wall 1c of the transmission case 1 by means of roller bearings 16, 17, 18.

Integrally mounted on a rear end of the counter shaft 15 to be rotatable therewith is a counter gear 19 that is placed on the same plane perpendicular to the output shaft 11 as an output gear 20 which meshes with the counter gear 19 to allow the counter shaft 15 to be drivably connected to the output shaft 11.

Here, the counter gear 19 is made smaller in a pitch circle diameter than the output gear 20, with the counter gear 19 and the output gear 20 constituting a reduction gear set.

Disposed between the rear end portion 5a of the first input shaft 5 and the counter shaft 15 are gear sets of the odd-numbered gear range group for "First-speed range", "Third-speed range" and "Reverse Drive". These gear sets include a "First-speed range" gear set G1, a "Reverse Drive" gear set GR, and a "Third-speed range" gear set G3, which are provided in this order from a front side closer to the engine toward a rear side of the transmission case 1.

The "First-speed range" gear set G1 and the "Reverse Drive" gear set GR are located between a rear end of the second input shaft 6 and the intermediate wall 1b of the transmission case 1. The "Third-speed range" gear set G3 is located between the intermediate wall 1b and the rear wall 1c of the transmission case 1 at a position closer to the intermediate wall 1b.

The "First-speed range" gear set G1 is comprised of a "First-speed range" input gear 21 integrally formed with the rear end portion 5a of the first input shaft 5, and a "First-speed range" output gear 22 freely rotatable on the counter shaft 15 and meshing with the "First-speed range" input gear 21.

The "Reverse Drive" gear set GR is comprised of a "Reverse Drive" input gear 23 integrally formed with the rear end portion 5a of the first input shaft 5, a "Reverse Drive" output gear 24 freely rotatable on the counter shaft 15, and a "Reverse Drive" idler gear 25 meshing with the "Reverse Drive" input gear 23 to reverse the rotation direction of the "Reverse Drive" input gear 23 and make the rotation direction of "Reverse Drive" output gear 24 opposite to that of the other output gears. The "Reverse Drive" idler gear is rotatably carried on a shaft 25a which is secured to the intermediate wall 1b of the transmission case 1.

The "Third-speed range" gear set G3 is comprised of a "Third-speed range" input gear 26 freely rotatable on the rear end portion 5a of the first input shaft 5, and a "Third-speed range" output gear 27 drivably connected to the counter shaft 15 and meshing with the "Third-speed range" input gear 26.

Disposed on the counter shaft 15 between the "First-speed range" output gear 22 and the "Reverse Drive" output gear 24 is a "First-speed range-Reverse Drive" synchronizer (meshing mechanism) 28 that includes an axially movable synchronizer sleeve 28a. The synchronizer sleeve 28a normally assumes a neutral position, as shown in FIG. 1. The synchronizer sleeve 28a is movable leftward in FIG. 1 from the neutral position to mesh with a clutch gear 28b, to thereby allow the "First-speed range" output gear 22 to be drivably connected to the counter shaft 15 to enable the selection of the "First-speed range", as described below. The synchronizer sleeve 28a is also movable rightward from the neutral position to mesh with a clutch gear 28c to allow the "Reverse Drive" output gear 24 to be drivably connected to the counter shaft 15 to enable the selection of the "Reverse Drive", as described below.

Disposed on the rear end portion 5a of the first input shaft 5 at a position between the "Third-speed range" output gear 2 and the output gear 20 is a "Third-speed range-Fifth-speed range" synchronizer 29 that includes an axially movable synchronizer sleeve 29a. The synchronizer sleeve 29a normally assumes a neutral position, as shown in FIG. 1. The synchronizer sleeve 29a is movable leftward in FIG. 1 from the neutral position to mesh with a clutch gear 29b to allow the "Third-speed range" input gear 26 to be drivably connected to the first input shaft 5 to enable the selection of the "Third-speed range" , as described below, and also movable rightward in FIG. 1 from the neutral position to mesh with a clutch gear 29c to allow the output gear 20 (output shaft 11) to be directly connected to the first input shaft 5 to enable the selection of the "Fifth-speed range", as described below.

Disposed between the hollow second input shaft 6 and the counter shaft 15 are gear sets of the even-numbered gear range group for "Second-speed range", "Fourth-speed range" and "Sixth-speed range". These gear sets include a "Sixth-speed range" gear set G6, a "Second-speed range" gear set G2 and a "Fourth-speed range" gear set G4, which are provided in this order in an area from the front side closer to the engine to the rear end of the second input shaft 6.

The "Sixth-speed range" gear set G6 is mounted to a front end of the second input shaft 6 at a position near the front wall 1a of the transmission case 1, and the "Fourth-speed range" gear set G4 is mounted on a rear end of the second input shaft 6 while the "Second-speed range" gear set G2 is mounted to the second input shaft 6 at a central area thereof.

The "Sixth-speed range" gear set G6 is comprised of a "Sixth-speed range" input gear 30 integrally formed with an outer periphery of the second input shaft 6, and a "Sixth-speed range" output gear 31 freely rotatable on the counter shaft 15 and meshing with the "Sixth-speed range" input gear 30.

The "Second-speed range" gear set G2 is comprised of a "Second-speed range" input gear 32 integrally formed with the outer periphery of the second input shaft 6 and a "Second-speed range" output gear 33 freely rotatable on the counter shaft 15 and meshing with the "Second-speed range" input gear 32.

The "Fourth-speed range" gear set G4 is comprised of a "Fourth-speed range" input gear 34 integrally formed on the outer periphery of the second input shaft 6 at a rear end thereof, and a "Fourth-speed range" output gear 35 freely rotatable on the counter shaft 15 and meshing with the "Fourth-speed range" input gear 34.

Now, description is made of a reason why the gear sets G2, G4, G6 of the even-numbered gear range group for "Second-speed range", "Fourth-speed range" and "Sixth-speed range" are disposed in such a way described above between the second input shaft 6 and the counter shaft 15, that is, a reason why the "Sixth-speed range" gear set G6, the "Second-speed range" gear set G2 and the "Fourth-speed range" gear set G4 are provided in this order in the area from the front side closer to the engine to the rear end of the second input shaft 6.

When assembling the gear sets G2, G4, G6 of the even-numbered gear range group for "Second-speed range", "Fourth-speed range" and "Sixth-speed range" , there are various requirements involving: a first requirement wherein, of the needle bearings 7, 8 to be disposed between the first and second input shafts 5, 6, the rear needle bearing 8 should be preferably positioned within the second input shaft 6 at a position close proximity to the rear end thereof in relation to a bearing span; and a second requirement wherein, in terms of strength of the counter shaft 15 and an ease of assembling the associated components, a middle portion of the counter shaft 15 at a boundary area between the even-numbered gear range group for "Second-speed range", "Fourth-speed range" and "Sixth-speed range" and the odd-numbered gear range group for "First-speed range", "Third-speed range" and "Reverse Drive" preferably has the maximum diameter and the counter shaft preferably has a shape with a diameter that progressively decreases toward the front end of the counter shaft 15.

To satisfy such requirements, first, among the input gears 30, 32, 34 to be formed on the second input shaft 6, the gear ranges for "Sixth-speed range" and "Fourth-speed range" , related to the input gears 30, 34 that are available to provide bearing accommodating spaces for the needle bearing 8 in an area between the first input shaft 5 and the second input shaft 6, are selected and, of these selected gear ranges, the gear set G4 of the lowest-speed gear ratio of "Fourth-speed range" is placed in a position remotest from the engine.

Then, of the other gear ranges for "Sixth-speed range" and "Second-speed range", the gear set G6 of the highest-speed gear ratio of "Sixth-speed range" is placed in a position closest to the engine.

Finally, the gear set G2 of the remaining gear range for "Second-speed range" is disposed between both the gear sets G4, G6.

While in the embodiment, since the even-numbered gear ranges include three units of the "Second-speed range", the "Fourth-speed range" and the "Sixth-speed range" and the remaining gear range to be disposed between the gear sets on both sides includes only one unit of the "Second-speed range", no trouble arises in a placement order for the remaining gear range, it is needless to say that under circumstances where the remaining gear range to be disposed between the gear sets on the both sides includes a plurality of units, these units are disposed such that, in view of the requirement for the counter shaft 15 to be narrowed toward the front end thereof from the middle portion, as the gear set belongs to a high speed gear range, such a gear set should be placed closer to the engine.

In the embodiment, there is a tendency wherein the gear 33 carried on the counter shaft 15 forming the "Second-speed range" gear set G2, has a larger diameter than that of the gear 35 carried on the counter shaft 15 forming the "Fourth-speed range" gear set G4, while an outer diameter of the counter shaft 15 at which the gear 33 is fixedly secured, has a smaller diameter than that of an area at which the gear 35 is placed. Such a tendency can be easily addressed by taking measures of intervening an annular spacer 36 (FIG. 2) between the gear 33 and the counter shaft 15. Thus, no probability occurs for the above-described particular placement of the gear sets to have a difficulty in satisfying the above-described requirement for the counter shaft 15 to be narrowed from the middle portion toward the front end.

Also disposed on the counter shaft 15 between a "Sixth-speed range" output gear 31 and the "Second-speed range" output gear 33 is a "Sixth-speed range Only" synchronizer 37 that includes a synchronizer sleeve 37a.

The synchronizer sleeve 37a normally assumes a neutral position, as shown in FIG. 1. The synchronizer sleeve 37a is movable leftward in FIG. 1 from the neutral position to mesh with a clutch gear 37b to allow the "Sixth-speed range" output gear 31 to be drivably connected to the counter shaft 15 to enable the selection of the "Sixth-speed range", as described below.

Further, disposed on the counter shaft 15 between a "Second-speed range" output gear 33 and the "Fourth-speed range" output gear 35 is a "Second-speed range-Fourth-speed range" synchronizer 38 that includes a synchronizer sleeve 38a. The synchronizer sleeve 38a normally assumes a neutral position, as shown in FIG. 1.

The synchronizer sleeve 38a is movable leftward in FIG. 1 from the neutral position to mesh with a clutch gear 38b to allow the "Second-speed range" output gear 33 to be drivably connected to the counter shaft 15 to enable the selection of the "Second-speed range", as described below.

The synchronizer sleeve 38a is movable rightward in FIG. 1 from the neutral position to mesh with a clutch gear 38c to allow the "Fourth-speed range" output gear 35 to be drivably connected to the counter shaft 15 to enable the selection of the "Fourth-speed range", as described below.

Now, the operation of the twin-clutch manual transmission of the embodiment set forth above will be described below.

In a neutral (N) range and a parking (P) range where no power delivery is required, both the clutches C1, C2 remain engaged while all of the synchronizer sleeves 28a, 29a, 37a, 38a of the synchronizers 28, 29, 37, 38, respectively, remain in the respective neutral positions to render the twin-clutch manual transmission inoperative.

In a "D" range, in which a forward drive power delivery is desired, and in an "R" range where a reverse drive power delivery is desired, the synchronizer sleeves 28a, 29a, 37a, 38a of the synchronizers 28, 29, 37, 38, respectively, are controllably actuated using hydraulic oil delivered from the oil pump 4, in a manner set forth below for thereby enabling the respective forward-drive gear ranges and reverse-drive gear range to be selected.

If the "First-speed range" is desired in the "D" range, the clutch C1, remaining in the engaged status, is disengaged and the synchronizer sleeve 28a of the synchronizer 28 is moved leftward in FIG. 1 to cause the gear 22 to be drivably connected to the counter shaft 15, whereupon the clutch C1 is engaged.

This allows the engine power output to be transferred from the clutch C1 to the output shaft 11 in an axial direction via the first input shaft 5, the "First-speed range" gear set G1, the counter shaft 15 and the output gear sets 19, 20, thereby enabling the power transfer to be achieved at the "First-speed range".

Also, if the "First-speed range" is selected for a startup of running, of course, it follows that the engagement and motion control of the clutch C1 is performed to meet such a startup mode.

During shifting-up from the "First-speed range" to the "Second-speed range", the clutch C2, remaining in the engaged status, is disengaged and the synchronizer sleeve 38a of the synchronizer 38 is moved leftward in FIG. 1 to cause the gear 33 to be drivably connected to the counter shaft 15 and, thereafter, the clutch C1 is disengaged while engaging the clutch C2 for thereby achieving the shifting-up from the "First-speed range" to the "Second-speed range".

Upon completion of such shifting-up operation, the synchronizer sleeve 38a of the synchronizer 38 is restored to its neutral position and the gear 22 is caused to disconnect from the counter shaft 15 whereupon the clutch C1 is engaged.

This allows the engine power output to be transferred from the clutch C2 to the output shaft 11 in the axial direction via the second input shaft 6, the "Second-speed range" gear set G2, the counter shaft 15 and the output gear sets 19, 20, thereby enabling the power transfer to be achieved at the "Second-speed range".

During shifting-up from the "Second-speed range" to the "Third-speed range", the clutch C1, remaining in the engaged status, is disengaged and the synchronizer sleeve 29a of the synchronizer 29 is moved leftward in FIG. 1 to cause the gear 26 to be drivably connected to the first input shaft 5 and, thereafter, the clutch C2 is disengaged while engaging the clutch C1 for thereby shifting up from the "Second-speed range" to the "Third-speed range".

Upon completion of such shifting-up operation, the synchronizer sleeve 38a of the synchronizer 38 is restored to its neutral position and the gear 33 is caused to disconnect from the counter shaft 15 whereupon the clutch C2 is engaged.

This allows the engine power output to be transferred from the clutch C1 to the output shaft 11 in the axial direction via the first input shaft 5, the "Third-speed range" gear set G3, the counter shaft 15 and the output gear sets 19, 20, thereby enabling the power transfer to be achieved at the "Third-speed range".

During shifting-up from the "Third-speed range" to the "Fourth-speed range", the clutch C2, remaining in the engaged status, is disengaged and the synchronizer sleeve 38a of the synchronizer 38 is moved rightward in FIG. 1 to cause the gear 35 to be drivably connected to the counter shaft 15 and, thereafter, the clutch C1 is disengaged while engaging the clutch C2 for thereby shifting up from the "Third-speed range" to the "Fourth-speed range".

Upon completion of such shifting-up operation, the synchronizer sleeve 29a of the synchronizer 29 is restored to its neutral position and the gear 26 is caused to disconnect from the first input shaft 5 whereupon the clutch C1 is engaged.

This allows the engine power output to be transferred from the clutch C1 to the output shaft 11 in the axial direction via the second input shaft 6, the "Fourth-speed range" gear set G4, the counter shaft 15 and the output gear sets 19, 20, thereby enabling the power transfer to be achieved at the "Fourth-speed range".

During shifting-up from the "Fourth-speed range" to the "Fifth-speed range", the clutch C1, remaining in the engaged status, is disengaged and the synchronizer sleeve 29a of the synchronizer 29 is moved rightward in FIG. 1 to cause the first input shaft 5 to be drivably connected to the output shaft 11 and, thereafter, the clutch C2 is disengaged while engaging the clutch C1 for thereby shifting up from the "Fourth-speed range" to the "Fifth-speed range".

Upon completion of such shifting-up operation, the synchronizer sleeve 38a of the synchronizer 38 is restored to its neutral position and the gear 35 is caused to disconnect from the counter shaft 15 whereupon the clutch C2 is engaged.

This allows the engine power output to be transferred from the clutch C1 to the output shaft 11 in the axial direction via the first input shaft 5 and the synchronizer sleeve 29a, thereby enabling the power transfer to be achieved at the "Fifth-speed range" with a speed reduction ratio of 1 : 1.

During shifting-up from the "Fifth-speed range" to the "Sixth-speed range", the clutch C2, remaining in the engaged status, is disengaged and the synchronizer sleeve 37a of the synchronizer 37 is moved leftward in FIG. 1 to cause the gear 31 to be drivably connected to the counter shaft 15 and, thereafter, the clutch C1 is disengaged while engaging the clutch C2 for thereby shifting up from the "Fifth-speed range" to the "Sixth-speed range".

Upon completion of such shifting-up operation, the synchronizer sleeve 29a of the synchronizer 29 is restored to its neutral position to release direct connection between the first input shaft 5 and the output shaft 11 whereupon the clutch C1 is engaged.

This allows the engine power output to be transferred from the clutch C2 to the output shaft 11 in the axial direction via the second input shaft 6, the "Sixth-speed range" gear G6, the counter shaft 15 and the output gear sets 19, 20, thereby enabling the power transfer to be achieved at the "Sixth-speed range".

Also, when sequentially shifting down from the "Sixth-speed range" to the "First-speed range", the shifting-down operations are executed in a manner opposite to those in which the shifting-up operations are conducted to achieve a given shift-down.

In the "R" range where the power delivery in the reverse drive is desired, the clutch C1 , which has remained in the engaged condition in the "N" range, is disengaged and the synchronizer sleeve 28a of the synchronizer 28 is moved rightward in FIG. 1 to cause the gear 24 to be drivably connected to the counter shaft 15, whereupon the clutch C1 is engaged.

This allows the engine power output to be transferred from the clutch C1 to the output shaft 11 in the axial direction via the first input shaft 5, the "Reverse drive" gear GR, the counter shaft 15 and the output gear sets 19, 20 and, in this moment, the "Reverse drive" gear set GR rotates in a reversed direction to enable power transfer in the "Reverse Drive" gear range.

Also, during a start in the "Reverse Drive" gear range, of course, it follows that the engagement and motion of the clutch C1 is controlled to meet the intended start in the reverse drive.

The twin-clutch manual transmission, of the embodiment with the structure set forth above, takes a structure wherein the output shaft 11, from which the engine power output, resulting from the gearshift executed depending on the selected gear range, is extracted, is concentrically placed in abutting relationship with the rear end of the first input shaft 5 to allow the output shaft 11 and the counter shaft 15 to be drivably connected to one another by means of the reduction gear set 19, 20.

Thus, the engine power output, resulting from the gearshift using the gear sets G1, GR, G3 of the gear range group disposed between the rear end portion 5a of the first input shaft 5 and the counter shaft 15 or the engine power output, resulting from the gearshift using the gear sets G2, G4, G6 of the gear range group disposed between the second input shaft 6 and the counter shaft 15, can be extracted from the output shaft 11 via the counter shaft 15 and the reduction gear set 19, 20.

Accordingly, the gear sets G1, GR, G3, G2, G4, G6 for respective gearshifts are located in a further upstream side of the torque transmission flow path than the reduction gear set 19, 20 and no chances occur for the engine power output with an increased torque, resulting from reduction in speed caused by the reduction gear set 19, 20, to pass through the gear sets G1, GR, G3, G2, G4, G6.

Therefore, a whole of the gear sets G1, GR, G3, G2, G4, G6 have no need to have respective face widths that withstand the above-described increased torque and only the reduction gear set 19, 20 may be sufficed to have a specification to withstand the above-described increased torque, thereby addressing the above issues of the increase in the power transmission in an axial dimension and the above issues related to the increase in costs.

Further, with the twin-clutch manual transmission of the embodiment, the gear range group to be disposed between the rear end portion 5a of the first input shaft 5 and the counter shaft 15 includes the odd-numbered gear range group for "First-speed range", "Reverse drive" and "Third-speed range" and the gear range group to be disposed between the second input shaft 6 and the counter shaft 15 includes the even-numbered gear range for "Second-speed range", "Fourth-speed range" and "Sixth-speed range" group whereby advantageous effects are obtained as described below.

Among the gears that form the gear sets G1, GR, G3, G2, G4, G6 of the respective gear ranges, the input gears 21, 23, 26, 32, 34, 30 to be disposed on the input shafts 5, 6 have progressively decreasing pitch circle diameters as the gear ranges are becoming lower in speed and among the input gears 21, 23, 26, 32, 34, 30, the "First-speed range" input gear 21 has the minimum pitch circle diameter.

Suppose that the gear ranges disposed between the second input shaft 6 and the counter shaft 15 include the odd-numbered gear ranges. This results in a need for the "First-speed range" input gear 21, with the minimum pitch circle diameter, to be mounted on the outer periphery of the second input shaft 6 with a large diameter because of a hollow configuration, resulting in a difficulty of assembling the "First-speed range" input gear 21.

In contrast, if an outer diameter of the second input shaft 6 is selected to be small to make it possible for the "First-speed range" input gear 21 to be assembled, not only an issue arises in the occurrence of a decrease in strength of the "First-speed range" input gear 21 but also a need arises for the first input shaft 5, which is elongated and inserted through the second input shaft 6, to be formed in a small diameter, causing a decrease in strength of the first input shaft 5.

However, like in the embodiment, in cases where the gear range group mounted between the rear end portion 5a of the first input shaft 5 and the counter shaft 15 includes a group of the odd-numbered gear ranges for "First-speed range", "Reverse drive" and "Third-speed range" and the gear range group mounted between the second input shaft 6 and the counter shaft 15 includes a group of the even-numbered gear ranges for "Second-speed range", "Fourth-speed range" and "Six Speed", it becomes possible to assemble the input gears 23, 34, 30, related to the gear ranges greater than that of the "Second-speed range", onto the second input shaft 6. Among these, even the "Second-speed range" input gear 23 with the minimum pitch circle diameter can be mounted on the second input shaft 6 without decreasing the diameter of the second input shaft 6, thereby addressing the issues related to the decrease in strength of the second input shaft 6 and the first input shaft 5,

Further, with the twin-clutch manual transmission, the meshing mechanism 29, which enables direct connection between the input shaft 5 and the output shaft 11, is located in an abutment connecting section between the rear end of the first input shaft 5 and the output shaft 11 and the gear range, selectable through this direct connection, is arranged to include the "Fifth-speed range" (odd-numbered gear range).

This enables the "First-speed range" to the "Fourth-speed range" to be determined in terms of a cross ratio to make it possible to increase a product value of the twin-clutch manual transmission while enabling a reduction in a distance between the input shafts 5, 6 and the counter shaft 15, thereby making it possible to realize a miniaturization in diameter of the twin-clutch manual transmission.

Additionally, due to the provision of the common meshing mechanism 29 that that is used both as a meshing mechanism, for suitably and drivably coupling the gear set G3 of the odd-numbered gear range for "Third-speed range" mounted at the rearmost end of the first input shaft 5, and a meshing mechanism, for providing the above-described direct connection, the use of such a double purpose mechanism makes it possible to realize a reduction in an axial length of the twin-clutch manual transmission.

Furthermore, the twin-clutch manual transmission has a layout wherein the counter shaft 15 carries all of the meshing mechanisms 37, 38 operative to suitably engage the gear sets G2, G4, G6 of the even-numbered gear range group mounted between the second input shaft 6 and the counter shaft 15.

This results in no need to mount the synchronizers 37, 38 on the second input shaft 6 that has a tendency with reduction in wall thickness because of the presence of limitations in a radial space and it is remarkably advantageous to have a capability of avoiding a drop in rigidity of the second input shaft 6.

The twin-clutch manual transmission of the embodiment set forth above has further additional advantageous effects as explained below.

In the embodiment, the gear sets G2, G4, G6 of the even-numbered gear range group for "Second-speed range", "Fourth-speed range" and "Sixth-speed range" located between the second input shaft 6 and the counter shaft 15 are assembled in a manner described below.

That is, among the gears 30, 32, 34 mounted on the second input shaft 6, the gear set G4 of the lowest speed "Fourth-speed range" stage, forming one of the gear ranges for "Fourth-speed range" and "Sixth-speed range" associated with the gear sets 30, 34 whose diameters are available to provide a bearing accommodation space for the needle bearing 8 between the first input shaft 5 and the second input shaft 6, is mounted on the second input shaft 6 at an area remotest from the engine.

This enables the accommodation space for receiving the needle bearing 8 to be enhanced between the rear end of the second input shaft 6 and the first input shaft 5 without a need to form an annular recess in the first input shaft 5 for receiving the needle bearing 8. Thus, it becomes possible to accommodate the needle bearing 8 between the rear end of the second input shaft 6 and the first input shaft 5 without causing a drop in strength of the first input shaft 5.

Accordingly, the embodiment makes it possible to increase a bearing span between the needle bearings 7, 8 disposed between both the input shafts 5, 6, resulting in an increase in bearing rigidity between both the input shafts 5, 6.

With the embodiment, further, the gear sets G2, G4, G6 of the even-numbered gear range group for "Second-speed range", "Fourth-speed range" and "Sixth-speed range" and disposed between the second input shaft 6 and the counter shaft 15 and, of the gear range group for "Second-speed range" and "Sixth-speed range" other than the above-described "Fourth-speed range" gear range, the gear set G6 of the highest speed ("Sixth-speed range") gear range is assembled in a position closest to the engine.

This allows the gear 31, mounted on the counter shaft 15, forming part of the gear set G6, to have a small diameter because of the highest speed ratio, thereby enabling reduction in diameter of a front end of the counter shaft 15 in an area closer to the engine.

Another advantage resides in that the counter shaft 15 is formed to have a profile that progressively decreases in diameter from the middle portion toward the front end, enabling both factors required on the ground of assembling and the other factors required on the ground of strength to be satisfied.

Further, in cases wherein there are more gear range groups between the second input shaft 6 and the counter shaft 15 than those three groups, shown in FIGS. 1 and 2, and there are a plurality of gear ranges between one gear set, remotest from the engine, and the other gear set, closest to the engine, gear sets of these plural gear ranges are disposed such that the higher in speed of the gear set, the closer will be the engine for a position of such a gear set. This makes it possible to satisfy the above-described requirement in which the counter shaft 15 is narrowed from the middle portion toward the front end.

Furthermore, in cases where the gear shift groups located between the second input shaft 6 and the counter shaft 15 contain the even-numbered gear ranges, as shown by the example in FIGS. 1 and 2, it has been confirmed that the "Fourth-speed range" satisfies the above-described requirement in relation to a speed ratio suitable in practical use regardless of the number of relevant even-numbered gear ranges and it is practical to locate the "Fourth-speed range" gear set G4 in a position remotest from the engine.

With the embodiment, in addition, among the gear sets G2, G4, G6 of the gear range group for "Second-speed range", "Fourth-speed range" and "Sixth-speed range" provided between the second input shaft 6 and the counter shaft 15, the gear set G6, placed in the position closest to the engine, and the gear set G2 disposed in the vicinity of the gear set G6 enable the provision of the meshing mechanism 37 to suitably engage the gear set G6 placed in the position closest to the engine.

Therefore, no structural components, for synchronization meshing, involving a clutch gear, like the clutch gear 37b, are present between the meshing mechanism 37 and the gear set G2 (gear 33) and, to that extent, the gear set G2 (gear 33) can be arranged to be closer to the bearing section (roller bearing) 16 mounted on the front wall 1a of the transmission case 1 for rotatably supporting the counter shaft 15. This provides an increase in supporting rigidity of the counter shaft 15 for the gear set G2 (gear 33), by which increased torque is transferred because of the presence of the maximum gear ratio, to adequately withstand the relevant increased torque.

Also, as shown in FIGS. 1 and 2, due to a layout wherein the gear sets G2, G4, G6 of the gear range group for "Second-speed range", "Fourth-speed range" and "Sixth-speed range" are disposed between the second input shaft 6 and the counter shaft 15 in a manner as previously discussed and the meshing mechanisms 38, 37 for suitably and drivably coupling these gear sets G2, G4, G6 are mounted on the counter shaft 15 in a structure wherein the meshing mechanism 38, commonly used for the "Second-speed range" and the "Fourth-speed range", is positioned between the "Second-speed range" gear set G2 and the "Fourth-speed range" gear set G4 while the meshing mechanism 37 specific for the "Sixth-speed range" is positioned between the "Second-speed range" gear set G2 and the "Sixth-speed range" gear set G6, it becomes possible to have all of various advantageous effects set forth above and such a layout is highly advisable as a forward six-speed twin-clutch manual transmission for an FR-vehicle.

The preferred embodiments described herein are illustrative and not restrictive, and the invention may be practiced or embodied in other ways without departing from the spirit or essential character thereof. The scope of the invention being indicated by the claims, and all variations which come within the meaning of claims are intended to be embraced herein.

The present disclosure relates to subj ect matter contained in Japanese Patent Application No. 2004-082295, filed on March 22, 2004, the disclosure of which is expressly incorporated herein by reference in its entirety.

## Claims

1. A twin-clutch manual transmission comprising:
first and second input shafts (5, 6) adapted to selectively receive an engine power output through respective clutches (C1, C2), the second input shaft (6) being hollow and rotatably supported on the first input shaft (5);
a first gear range group including gear sets (G1 , G3, GR) which are disposed between a rear end portion (5a) of the first input shaft (5), protruding from a rear end of the second input shaft (6) in an area remote from an engine, and a counter shaft (15) parallel to the first and second input shafts (5, 6), to provide power transfer at their gear ratios, respectively;
a second gear range group including gear sets (G2, G4, G6) disposed between the second input shaft (6) and the counter shaft (15) to provide power transfer at their gear ratios, respectively;
an output shaft (11) placed in a concentric and abutting relationship with a rear end of the first input shaft (5) for extracting a power output resulting from speed reduction depending on a selected gear range; and
a reduction gear set (19, 20) disposed between the output shaft (11) and the counter shaft (15) to drivably connect the counter shaft (15) to the output shaft (11).

2. The twin-clutch manual transmission according to claim 1, wherein the first gear range group includes gear sets (G1, G3) for odd-numbered gear ranges and the second gear range group includes gear sets (G2, G4, G6) for even-numbered gear ranges.

3. The twin-clutch manual transmission according to claim 2, further comprising a meshing mechanism (29) disposed in an abutting section between the rear end of the first input shaft (5) and the output shaft (11) to provide direct connection between thefirstinputshaft (5) and the outputshaft (11), and associated with one of the gear sets for odd-numbered gear ranges for selecting a gear range in the direct connection.

4. The twin-clutch manual transmission according to claim 3, wherein a meshing mechanism (29) operative to provide power transfer in a gear set of the odd-numbered gear range group, located in the rearmost end of the first input shaft (5), comprises the meshing mechanism to provide the direct connection.

5. The twin-clutch manual transmission according to any one of claims 1 to 4, whereinmeshingmechanisms (37, 38) are provided for having the respective gear sets (G2, G4, G6) of the second gear range group engaged, and all of the meshing mechanisms (37, 38) are carried on the counter shaft (15).
